# EUROPÄISCHE PATENTSCHRIFT

(11) **EP 2 024 584 B1**
(45) Veröffentlichungstag und Bekanntmachung des Hinweises auf die Patenterteilung: **19.03.2014**
(21) Anmeldenummer: 07729803.2
(22) Anmeldetag: 01.06.2007
(51) Int. Cl.: E04F 13/14, E04F 15/08

(54) **MIT POLYMERDISPERSIONEN BESCHICHTETE FLIESEN SOWIE VERFAHREN ZU DEREN HERSTELLUNG**
TILES COATED WITH POLYMER DISPERSIONS AND METHOD FOR THEIR PRODUCTION
CARREAUX ENDUITS D'UNE DISPERSION DE POLYMERE AINSI QUE PROCEDE POUR LA FABRICATION DE CEUX-CI

(30) Priorität: 08.06.2006 DE 102006026699
(43) Veröffentlichungstag der Anmeldung: 18.02.2009
(73) Patentinhaber: Wacker Polymer Systems GmbH & Co. KG, 84489 Burghausen (DE)
(72) Erfinder: KILLAT, Marion, 84489 Burghausen (DE); FRITZE, Peter, 84533 Haiming (DE)
(74) Vertreter: Schuderer, Michael
(86) Internationale Anmeldenummer: PCT/EP2007/055406
(87) Internationale Veröffentlichungsnummer: WO 2007/141211

(56) Entgegenhaltungen:
- GB-A- 2 155 944

## Beschreibung

Die Erfindung betrifft Feinsteinzeugfliesen und Glasfliesen, deren Rückseite mit einem Polymerfilm beschichtet ist, sowie deren Herstellung und Verwendung.

Keramische Fliesen und Glasfliesen werden zur Verkleidung verschiedenster Untergründe eingesetzt. Je nach Fliesenart, Untergrundbeschaffenheit, Belastung verlegter Fliesen bzw. Ansprüchen an den Fliesenverbund, kommen unterschiedliche Verlegearten zum Einsatz.
Heute weit verbreitet ist das Verkleben der Fliesen im so genannten Dünnbettverfahren. Dabei werden Fliesen in einen Dünnbettmörtel eingelegt. Im ebenfalls gebräuchlichen Dickbettverfahren (,buttering floating') wird die Fliesenrückseite zusätzlich mit zementärem Klebemörtel benetzt, bevor die Fliesen mit der Rückseite auf eine Mörtelschicht aufgebracht und fixiert werden.
Weiterhin sind auch selbstklebende Fliesen bekannt, die ohne zusätzlichen Klebemörtel auskommen. Diese sind beispielsweise auf der Rückseite mit druckempfindlichen Klebstoffen beschichtet (z.B. EP 1044797 A1). Charakteristisch für das in EP 1044797 A1 beschriebene System ist allerdings die eingeschränkte Haftung zwischen Fliese und Untergrund, so dass verklebte Fliesen ohne Beschädigung vom Untergrund entfernt werden können. Ein Nachteil dieser Systeme besteht auch in der hohen Reaktivität druckempfindlicher Klebstoffe, d.h. nach Ansetzen der Fliese ist eine Korrektur der Position der Fliese kaum mehr möglich.
Um diesem Nachteil zu begegnen, wurde in EP 0001881 A1 eine Fliesenbeschichtung vorgestellt, die eine Mischung von polymerem Bindemittel und hydraulischem Material umfasst. Allerdings werden auf diese Weise Fliesen mit einer verhältnismäßig dicken Beschichtung erhalten (typischerweise 1 bis 5 mm). Zudem ist bei der Herstellung dieser Beschichtung bei Einsatz nicht ausreichend wasserlöslicher Bindemittel ein Zusatz organischer Lösungsmittel erforderlich. Dieses Erfordernis ist bei einer Umsetzung im großtechnischen Maßstab ökonomisch und ökologisch von Nachteil.

Vor diesem Hintergrund bestand die Aufgabe, die Haftung verklebter Fliesen oder Glasfliesen auf verschiedensten Untergründen zu steigern unter Vermeidung oben genannter nachteiliger Eigenschaften beschichteter Fliesen.

Gegenstand der Erfindung sind Feinsteinzeugfliesen und Glasfliesen, die auf der Rückseite mit einem Polymerfilm beschichtet sind, wobei die Beschichtung durch Aufbringen eines Homo- oder Mischpolymers in Form dessen wässriger Polymerdispersion oder wässeriger Lösung oder wässriger Redispersion eines in Wasser redispergierten Polymerpulvers und anschließender Trocknung der Dispersion erhalten wird.

Geeignete Fliesen sind unter anderem Steingut-, Steinzeug- und vorzugsweise Feinsteinzeugfliesen, aber auch Glasfliesen.
Unter den Begriff Glasfliesen fallen auch flächige Glasgegenstände bzw. Glasplatten.

Geeignete Polymere zur Beschichtung der Fliesenrückseiten sind solche auf der Basis von einem oder mehreren Monomeren aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine oder Diene, Vinylaromaten oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9R oder VeoVa10R (Handelsnamen der Firma Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat. Weitere Beispiele sind auch Vinylether, wie Methyl-, Ethyl- oder iso-Butylvinylether.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt sind wässrige Lösungen von Polyvinylalkoholen oder Polyvinylacetalen. Geeignete Polyvinylalkohole sind teilverseifte Polyvinylacetate oder teilverseifte . Vinylacetatcopolymerisate sowie vollverseifte Polyvinylacetate. Der Hydrolysegrad liegt dabei im allgemeinen zwischen 75 und 100 Mol-%. Beispiele für teilverseifte Vinylacetatcopolymerisate sind solche mit Ethylen-Comonomereinheiten und/oder carboxyl-, epoxy- oder silanolfunktionellen Comonomereinheiten. Geeignete Polyvinylacetale sind Polyvinylacetacetal, Polyvinylbutyral, welche gegebenenfalls noch mit carboxyl- oder epoxy- oder silanolfunktionellen Comonomereinheiten modifiziert sein können.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe Vinylester mit 1 bis 12 C-Atomen im Carbonsäurerest wie Vinylpropionat, Vinyllaurat, Vinylester von alpha-verzweigten Carbonsäuren mit 9 bis 13 C-Atomen wie VeoVa9R, VeoVa10R, VeoVa11R; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche gegebenenfalls noch 1 bis 40 Gew.-% Ethylen enthalten; Mischpolymerisate mit Vinylacetat, 1 bis 40 Gew.-% Ethylen und 1 bis 60 Gew.-% Vinylchlorid; wobei die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt nach dem Emulsionspolymerisationsverfahren oder nach dem Suspensionspolymerisationsverfahren, vorzugsweise nach dem Emulsionspolymerisationsverfahren, wobei die Polymerisationstemperatur im Allgemeinen 40°C bis 100°C, vorzugsweise 60°C bis 90°C beträgt. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide für die Polymerisation sind Pölyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly-(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie Ethen und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels dem Fachmann bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben einen Feststoffgehalt von 30 bis 75 Gew.-%, vorzugsweise von 50 bis 60 Gew.-%.

Die Herstellung von in Wasser redispergierbarer Polymerpulver erfolgt durch Trocknung entsprechender wässriger Dispersionen. Die Trocknung erfolgt beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage und gewünschtem Trocknungsgrad, gewählt.

Zur Herstellung der in Wasser redispergierbaren Polymerpulver werden die wässrigen Dispersionen, nach Zusatz von Schutzkolloiden als Trocknungshilfe, getrocknet. Dazu geeignete Schutzkolloide sind die bereits vorher bei der Polymerisation als geeignet genannten Schutzkolloide.

Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaoline, Silicate mit Teilchengrößen vorzugsweise im Bereich von 10 nm bis 100 µm.

Ein weiterer Gegenstand der Erfindung ist ein Verfahren zur Herstellung von Feinsteinzeugfliesen oder Glasfliesen, deren Rückseite mit einem Polymerfilm beschichtet ist. In diesem Verfahren wird ein Homo- oder Mischpolymer in Form dessen wässriger Polymerdispersion durch Sprühen oder Verstreichen oder andere Auftragsarten (Walzen) auf die Rückseite von Fliesen aufgebracht. Die Filmbildung erfolgt bei anschließender Trocknung mit Entweichen des Dispersionsmittels Wasser.

Anstelle einer Polymerdispersion kann auch eine wässerige Redispersion eines in Wasser redispergierten Polymerpulvers oder einer wässerigen Polymerlösung auf die Fliesenrückseite aufgebracht werden.

Die Gesamtmenge des auf die Fliesenrückseite aufgebrachten Polymerpulvers liegt vorzugsweise im Bereich zwischen 1 g/m² und 1000 g/m² und besonders bevorzugt zwischen 10 g/m² und 100 g/m².

Je nach Porosität der verwendeten Fliesen kann die Dispersion oder Redispersion oder Lösung entsprechend verdünnt eingesetzt werden. Bevorzugt sind Festgehalte der Dispersion (Redispersion) oder Konzentrationen der Lösung von 3 Gew.-% (hochporöse Fliese) bis 60 Gew.-% (geringe Porosität). Die bevorzugte Schichtdicke beträgt je nach Auftragsart 100 bis 500 µm.

Die erfindungsgemäßen Fliesen können in Standardverfahren zur Verlegung von Fliesen, wie beispielsweise dem Dünnbettverfahren oder dem "buttering floating", auf unterschiedliche Untergründe aufgebracht und fixiert werden.

Die erfindungsgemäßen Fliesen können zur Verkleidung von Flächen im Innen- wie Außenbereich eingesetzt werden. Insbesondere sind sie hierfür auch geeignet, wenn die verlegten Fliesen feuchter oder nasser Umgebung oder Frost-Tau-Wechseln ausgesetzt sind.

Überraschenderweise weisen die erfindungsgemäßen Fliesen (Tabelle 1, Beispiele 1-4) gegenüber unbehandelten Fliesen (Tabelle 1, Vergleichsbeispiele 1-2) nach Verlegen auf unterschiedlichen Untergründen eine signifikant erhöhte Haftzugfestigkeit auf. Dieser Effekt tritt unabhängig vom verwendeten Fliesenkleber und auch unabhängig vom Klima auf, welchem die verlegten Fliesen ausgesetzt sind (Tabelle 1).

Besonders deutlich tritt der Effekt erhöhter Haftzugfestigkeit verlegter erfindungsgemäßer Fliesen zu Tage, wenn diese einer Nasslagerung (Tabelle 1, Spalte 4) oder einer Nasslagerung bei Frost-Tau-Wechsel (Tabelle 1, Spalte 6), also einem die Fliesenhaftung besonders beanspruchenden Klima ausgesetzt sind.

Ganz besonders ausgeprägt ist dieser Effekt bei Feinsteinzeugfliesen, d.h. bei Fliesen mit geringer Wasseraufnahme (Tabelle 1, Beispiel 2 bzw. 4 sowie Spalte 4 bzw. 6). Solche Fliesen sind aufgrund geringer Porosität allgemein schwer zu verklebbar.

Ein weiterer Vorteil beim Verlegen erfindungsgemäßer Fliesen gegenüber selbstklebenden Fliesen, die ohne zementären Mörtel verlegt werden, besteht in der Korrekturmöglichkeit der Position der erfindungsgemäßen Fliese nach Ansetzen auf einen Untergrund, da die Fixierung auf dem Mörtelbett kurzer Zeit bedarf und nicht sofort beim Andrücken der Fliese auf den Untergrund erfolgt.

Das erfindungsgemäße Verfahren zur Herstellung der erfindungsgemäßen Fliesen ist ökonomisch vorteilhaft, da hierbei keine organischen Lösungsmittel erforderlich sind, sondern statt dessen ausschließlich Wasser als Lösungs- bzw. Dispergiermittel Anwendung findet. Durch Vermeidung der Freisetzung organischer Lösungsmittel, ist das erfindungsgemäße Verfahren zudem umweltschonend.

Darüber hinaus gelingt es durch Anwendung des erfindungsgemäßen Verfahrens zur Herstellung der erfindungsgemäßen Fliesen, beschichtete Fliesen mit geringer Beschichtungsdicke herzustellen. Auch dies ist ökonomisch mit erheblichen Vorteilen verbunden, da nur ein entsprechend geringer Materialeinsatz zur Herstellung des Produkts erforderlich ist.

Die folgenden Beispiele dienen der detaillierten Erläuterung der Erfindung und sind in keiner Weise als Einschränkung zu verstehen.

### Beispiele:

Zur Prüfung wurden folgende Fliesen eingesetzt:
F1: Steinzeugfliese
F2: Feinsteinzeugfliese

Zur Prüfung wurden folgende Polymere in Form deren 25 %iger wässriger Dispersionen eingesetzt:
D1: Ethylen-Vinylacetat-Copolymere, Tg 5°C, polyvinylalkoholstabilisiert
D2: Styrol-Butylacrylat-Copolymere mit silanfunktionellen Gruppen, Tg 10°C, emulgatorstabilisiert

Die Dispersionen wurden mit einem Pinsel in einem einmaligen Auftrag auf die Fliesenrückseite gestrichen und trocknen gelassen.
Beispiel 1: F1 mit D1-Dispersionsfilm
Beispiel 2: F2 mit D1-Dispersionsfilm
Beispiel 3: F1 mit D2-Dispersionsfilm
Beispiel 4: F2 mit D2-Dispersionsfilm
Vergleichsbeispiel 1: unbehandelte F1
Vergleichsbeispiel 2: unbehandelte F2

Zur Ausprüfung wurden die gemäß der Beispiele 1-4 bzw. Vergleichsbeispiele 1-2 erhaltenen Fliesen mit einem Fliesenkleber der nachfolgenden Zusammensetzung verklebt.

### Fliesenkleber:

Die Fliesen wurden mit verschiedene Mengen an Dispersionspulver enthaltenden zementären Fliesenklebern verklebt und die Haftzugfestigkeiten geprüft.

### Fliesenkleberprüfrezeptur:

| | |
|---|---|
| Zement | 40 Teile |
| Quarzsand | 53 - 59 Teile |
| Celluloseether | 0,5 Teile |
| Weitere Additive | 0,5 Teile |
| Dispersionspulver Vac/VeoVa/E, Tg 5°C | 0 - 6 Teile |
| | |
| Wasser | 21 - 26 Teile auf 100 Teile Trockenmischung |

| | |
|---|---|
| Fliesenkleber FK1: | 0% Dispersionspulver |
| Fliesenkleber FK2: | 2,8% Dispersionspulver |
| Fliesenkleber FK3: | 4,5% Dispersionspulver |
| Fliesenkleber FK4: | 6% Dispersionspulver |

An Hand der Beispiele 1-4 bzw. Vergleichsbeispiele 1-2 wurde die Abhängigkeit der Haftzugfestigkeit [in N/mm²] verlegter Fliesen von Fliesenklebern sowie von Lagerbedingungen untersucht. Die Ermittlung der Haftzugswerte in N/mm² erfolgte nach EN 12004 (Prüfnorm EN 1348).

| | |
|---|---|
| 28d NK: | 28 Tage Normklima |
| 7d NK/21d H₂O: | 7 Tage Normklima/21 Tage Nasslagerung |
| 14d NK/14d 70°C/1d NK: | 14 Tage Normklima/14 Tage 70°C/1 Tag Normklima |
| Frost-Tau: | 7 Tage Normklima/21 Tage Nasslagerung/25 Frost-Tau-Wechsel |
| OZ 15 Min: | einlegen der Fliese 15 Minuten nach dem Aufziehen des FK, 28 Tage Normklima |

Die Ergebnisse der Haftzugfestigkeiten sind in Tabelle 1 zusammengefasst.

**Tabelle 1:**

| Beispiele | Fliesenkleber | 28d NK | 7d NK/ 21d H₂O | 14d NK/14d 70°C/1d NK | Frost-Tau | OZ 15 min |
|---|---|---|---|---|---|---|
| 1 | FK1 | 0,94 | 0,92 | 0,74 | 0,97 | 0,83 |
| | FK2 | 1,49 | 0,95 | 0,86 | 0,96 | 1,24 |
| | FK3 | 1,78 | 0,91 | 0,89 | 1,03 | 1,51 |
| | FK4 | 1,94 | 1,01 | 1,16 | 1,11 | 1,64 |
| 2 | FK1 | 0,93 | 0,81 | 0,77 | 0,90 | 0,85 |
| | FK2 | 1,33 | 0,85 | 0,99 | 0,95 | 1,23 |
| | FK3 | 1,72 | 0,79 | 1,17 | 0,91 | 1,40 |
| | FK4 | 1,88 | 0,91 | 1,43 | 1,11 | 1,54 |
| 3 | FK1 | 0,97 | 1,06 | 0,78 | 1,05 | 0,87 |
| | FK2 | 1,33 | 0,92 | 1,20 | 1,10 | 1,10 |
| | FK3 | 1,54 | 1,04 | 1,54 | 1,18 | 1,10 |
| | FK4 | 1,69 | 1,03 | 1,73 | 1,23 | 1,11 |
| 4 | FK1 | 1,14 | 0,71 | 0,85 | 0,81 | 0,92 |
| | FK2 | 1,50 | 0,75 | 1,44 | 0,86 | 1,21 |
| | FK3 | 1,63 | 0,74 | 1,84 | 0,85 | 1,31 |
| | FK4 | 1,90 | 0,82 | 2,13 | 0.90 | 1,31 |

| Vergleichs beispiele | | | | | | |
|---|---|---|---|---|---|---|
| 1 | FK1 | 0,71 | 0,60 | 0,31 | 0,71 | 0,72 |
| | FK2 | 1,27 | 0,61 | 0,80 | 0,73 | 0,90 |
| | FK3 | 1,54 | 0,70 | 0,90 | 0,75 | 0,96 |
| | FK4 | 1,79 | 0,71 | 1,19 | 0,77 | 1,22 |
| 2 | FK1 | 0,60 | 0,23 | 0,00 | 0,32 | 0,85 |
| | FK2 | 0,91 | 0,30 | 0,18 | 0,35 | 0,84 |
| | FK3 | 1,16 | 0,41 | 0,00 | 0,54 | 1,09 |
| | FK4 | 1,34 | 0,54 | 0,24 | 0,62 | 1,16 |

## Patentansprüche

1. Feinsteinzeugfliese oder Glasfliese mit einer Polymerfilmbeschichtung auf der Rückseite der Fliese, **dadurch gekennzeichnet, dass** die Beschichtung durch Aufbringen eines Homo- oder Mischpolymers in Form dessen wässriger Polymerdispersion oder wässeriger Lösung oder wässriger Redispersion eines in Wasser redispergierten Polymerpulvers und anschließender Trocknung erhalten wird.

2. Feinsteinzeugfliese oder Glasfliese nach Anspruch 1, **dadurch gekennzeichnet, dass** zur Herstellung der Polymerdispersion oder des Polymerpulvers oder der Lösung ein Monomer oder mehrere Monomere aus der Gruppe umfassend Vinylester von Carbonsäuren mit 1 bis 15 C-Atomen, Methacrylsäureester oder Acrylsäureester mit unverzweigten oder verzweigten Alkoholen mit 1 bis 15 C-Atomen, Olefine oder Diene, Vinylaromaten oder Vinylhalogenide, eingesetzt werden.

3. Feinsteinzeugfliese oder Glasfliese nach Anspruch 1 bis 2, **dadurch gekennzeichnet, dass** zur Herstellung der Polymerdispersion oder des Polymerpulvers oder der Lösung ein Monomer oder mehrere Monomere aus der Gruppe umfassend Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, Ethylen, Propylen und 1,3-Butadien, Styrol und Vinyltoluol, Vinylchlorid eingesetzt werden.

4. Feinsteinzeugfliese oder Glasfliese nach Anspruch 1 bis 3, **dadurch gekennzeichnet, dass** als Polymer Mischpolymerisate eingesetzt werden umfassend
Mischpolymerisate von Vinylacetat mit Ethylen und gegebenenfalls einem oder mehreren weiteren Vinylestern oder Mischpolymerisate von Vinylacetat mit Ethylen und Acrylsäureester
oder Mischpolymerisate von Vinylacetat mit Ethylen und Vinylchlorid,
oder Mischpolymerisate von Styrol und 1,3-Butadien, oder Mischpolymerisate unterschiedlicher Acrylsäureester wie Methylmethacrylat mit n-Butylacrylat und/oder 2-Ethylhexylacrylat und gegebenenfalls Ethylen,
oder Mischpolymerisate von Styrol mit Acrylsäureester mit einem oder mehreren Monomeren aus der Gruppe umfassend Methylacrylat, Ethylacrylat, Propylacrylat, n-Butylacrylat, 2-Ethylhexylacrylat,
oder Mischpolymerisate umfassend Vinylacetat und Acrylsäureester mit einem oder mehreren Monomeren aus der Gruppe umfassend Methylacrylat, Ethylacrylat, Propylacrylat, n-Butylacrylat, 2-Ethylhexylacrylat und gegebenenfalls Ethylen,
wobei die Mischpolymerisate zusätzlich Hilfsmonomere enthalten können.

5. Feinsteinzeugfliese oder Glasfliese nach Anspruch 1 bis 4, **dadurch gekennzeichnet, dass** als Homo- oder Mischpolymer teilverseifte Polyvinylacetate oder teilverseifte Vinylacetat-Copolymerisate oder vollverseifte Polyvinylacetate oder Polyvinylacetale eingesetzt werden.

6. Verfahren zur Herstellung von Feinsteinzeugfliesen oder Glasfliesen nach Anspruch 1-5, **dadurch gekennzeichnet, dass** ein Homo- oder Mischpolymer in Form dessen wässriger Polymerdispersion oder wässeriger Lösung oder wässriger Redispersion eines in Wasser redispergierten Polymerpulvers insbesondere durch Sprühen, Verstreichen oder Walzen auf die Rückseite von Fliesen aufgebracht wird und durch anschließende Trocknung ein Film gebildet wird.

7. Verwendung von Feinsteinzeugfliesen oder Glasfliesen nach Anspruch 1-5 zur Verkleidung von Flächen im Innen- wie Außenbereich als Wand- oder Bodenfliesen.

## Claims

1. Fine stoneware tile or glass tile having a polymer film coating on the rear side of the tile, **characterized in that** the coating is obtained by application of a homopolymer or copolymer in the form of its aqueous polymer dispersion or aqueous solution or aqueous redispersion of a polymer powder redispersed in water and subsequent drying.

2. Fine stoneware tile or glass tile according to Claim 1, **characterized in that** a monomer or a plurality of monomers from the group consisting of vinyl esters of carboxylic acids having from 1 to 15 carbon atoms, methacrylic esters or acrylic esters with unbranched or branched alcohols having from 1 to 15 carbon atoms, olefins and dienes, vinylaromatics and vinyl halides is/are used for producing the polymer dispersion or the polymer powder or the solution.

3. Fine stoneware tile or glass tile according to Claim 1 or 2, **characterized in that** a monomer or a plurality of monomers from the group consisting of vinyl acetate, vinyl propionate, vinyl butyrate, vinyl-2-ethylhexanoate, vinyl laurate, 1-methylvinyl acetate, vinyl pivalate and vinyl esters of α-branched monocarboxylic acids having from 9 to 13 carbon atoms, methyl acrylate, methyl methacrylate, ethyl acrylate, ethyl methacrylate, propyl acrylate, propyl methacrylate, n-butyl acrylate, n-butyl methacrylate, 2-ethylhexyl acrylate, norbornyl acrylate, ethylene, propylene and 1,3-butadiene, styrene and vinyltoluene, vinyl chloride is/are used for producing the polymer dispersion or the polymer powder or the solution.

4. Fine stoneware tile or glass tile according to any of Claims 1 to 3, **characterized in that** copolymers comprising
copolymers of vinyl acetate with ethylene and, if appropriate, one or more further vinyl esters or copolymers of vinyl acetate with ethylene and acrylic esters
or copolymers of vinyl acetate with ethylene and vinyl chloride,
or copolymers of styrene and 1,3-butadiene,
or copolymers of various acrylic esters such as methyl methacrylate with n-butyl acrylate and/or 2-ethylhexyl acrylate and, if appropriate, ethylene,
or copolymers of styrene with acrylic esters together with one or more monomers from the group consisting of methyl acrylate, ethyl acrylate, propyl acrylate, n-butyl acrylate, 2-ethylhexyl acrylate,
or copolymers comprising vinyl acetate and acrylic esters together with one or more monomers from the group consisting of methyl acrylate, ethyl acrylate, propyl acrylate, n-butyl acrylate, 2-ethylhexyl acrylate and, if appropriate, ethylene,
where the copolymers can additionally contain auxiliary monomers,
are used as polymer.

5. Fine stoneware tile or glass tile according to any of Claims 1 to 4, **characterized in that** partially hydrolyzed polyvinyl acetates or partially hydrolyzed vinyl acetate copolymers or fully hydrolyzed polyvinyl acetates or polyvinyl acetals are used as homopolymers or copolymers.

6. Process for producing fine stoneware tiles or glass tiles according to any of Claims 1-5, **characterized in that** a homopolymer or copolymer in the form of its aqueous polymer dispersion or aqueous solution or aqueous redispersion of a water-redispersed polymer powder is applied, in particular, by spraying, painting or rolling to the rear side of tiles and a film is formed by subsequent drying.

7. Use of fine stoneware tiles or glass tiles according to any of Claims 1-5 as wall or floor tiles for lining surfaces in interior and exterior applications.

## Revendications

1. Carreau en grès cérame ou carreau en verre présentant un revêtement en film polymère sur la face arrière du carreau, **caractérisé en ce que** le revêtement est obtenu par application d'un homopolymère ou d'un copolymère sous forme de sa dispersion polymère aqueuse ou de sa solution aqueuse ou de la redispersion aqueuse d'une poudre polymère redispersée dans l'eau et séchage consécutif.

2. Carreau en grès cérame ou carreau en verre selon la revendication 1, **caractérisé en ce qu'**on utilise, pour la préparation de la dispersion polymère ou de la poudre polymère ou de la solution, un ou plusieurs monomères du groupe comprenant les esters vinyliques d'acides carboxyliques comprenant 1 à 15 atomes de carbone, les esters de l'acide méthacrylique ou de l'acide acrylique avec des alcools non ramifiés ou ramifiés comprenant 1 à 15 atomes de carbone, les oléfines ou les diènes, les aromatiques de vinyle ou les halogénures de vinyle.

3. Carreau en grès cérame ou carreau en verre selon les revendications 1 à 2, **caractérisé en ce qu'**on utilise, pour la préparation de la dispersion de polymère ou de la poudre polymère ou de la solution, un ou plusieurs monomères du groupe comprenant l'acétate de vinyle, le propionate de vinyle, le butyrate de vinyle, le 2-éthylhexanoate de vinyle, le laurate de vinyle, l'acétate de 1-méthylvinyle, le pivalate de vinyle et les esters vinyliques d'acides monocarboxyliques ramifiés en position α comprenant 9 à 13 atomes de carbone, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, l'acrylate de norbornyle, l'éthylène, le propylène et le 1,3-butadiène, le styrène et le vinyltoluène, le chlorure de vinyle.

4. Carreau en grès cérame ou carreau en verre selon les revendications 1 à 3, **caractérisé en ce qu'**on utilise, comme polymère, des copolymères comprenant les copolymères d'acétate de vinyle et d'éthylène et le cas échéant d'un ou de plusieurs autres esters de vinyle ou les copolymères d'acétate de vinyle et d'éthylène et des esters de l'acide acrylique ou les copolymères d'acétate de vinyle et d'éthylène et de chlorure de vinyle ou les copolymères de styrène et de 1,3-butadiène, ou les copolymères de différents esters de l'acide acrylique tels que le méthacrylate de méthyle et de l'acrylate de n-butyle et/ou de l'acrylate de 2-éthylhexyle et le cas échéant de l'éthylène, ou les copolymères de styrène et d'esters de l'acide acrylique et d'un ou de plusieurs monomères du groupe comprenant l'acrylate de méthyle, l'acrylate d'éthyle, l'acrylate de propyle, l'acrylate de n-butyle, l'acrylate de 2-éthylhexyle, ou les copolymères comprenant de l'acétate de vinyle et des esters de l'acide acrylique et un ou plusieurs monomères du groupe comprenant l'acrylate de méthyle, l'acrylate d'éthyle, l'acrylate de propyle, l'acrylate de n-butyle, l'acrylate de 2-éthylhexyle et le cas échéant l'éthylène,
les copolymères pouvant en outre contenir des monomères auxiliaires.

5. Carreau en grès cérame ou carreau en verre selon les revendications 1 à 4, **caractérisé en ce qu'**on utilise, comme homopolymère ou copolymère, des poly(acétates de vinyle) partiellement saponifiés ou des copolymères d'acétate de vinyle partiellement saponifiés ou des poly(acétates de vinyle) ou des polyvinylacétals complètement saponifiés.

6. Procédé pour la fabrication de carreaux en grès cérame ou de carreaux en verre selon les revendications 1-5, **caractérisé en ce qu'**un homopolymère ou un copolymère sous forme de sa dispersion polymère aqueuse ou de sa solution aqueuse ou de la redispersion aqueuse d'une poudre polymère redispersée dans l'eau est appliqué, en particulier par pulvérisation, enduction ou au rouleau, sur la face arrière de carreaux et un film est formé par séchage consécutif.

7. Utilisation de carreaux en grès cérame ou de carreaux en verre selon les revendications 1-5 pour le revêtement de surfaces à l'intérieur ainsi qu'à l'extérieur comme carreaux pour parois ou sols.
